# EUROPÄISCHE PATENTSCHRIFT

(11) **EP 0 950 347 B1**
(45) Veröffentlichungstag und Bekanntmachung des Hinweises auf die Patenterteilung: **07.08.2002**
(21) Anmeldenummer: 99106146.6
(22) Anmeldetag: 07.04.1999
(51) Int. Cl.: A01D 78/10

(54) **Heuwerbungsmaschine**
Haymakingmachine
Machine de fenaison

(30) Priorität: 17.04.1998 DE 29806999 U
(43) Veröffentlichungstag der Anmeldung: 20.10.1999
(73) Patentinhaber: Kverneland Gottmadingen GmbH & Co. KG, 78244 Gottmadingen (DE)
(72) Erfinder: Maier, M., D-7702 Gottmadingen (DE); Gohl, S., D-78239 Rielasingen/Worblingen (DE)
(74) Vertreter: Grünecker, Kinkeldey, Stockmair & Schwanhäusser Anwaltssozietät

(56) Entgegenhaltungen:
- EP-A- 0 614 604
- EP-A- 0 763 321
- EP-A- 0 779 022
- EP-A- 0 845 199
- DE-A- 2 828 282
- DE-A- 4 021 812
- DE-U- 9 002 630
- DE-U- 9 014 438
- DE-U- 9 400 521
- US-A- 3 645 077

## Beschreibung

Die Erfindung betrifft eine Heuwerbungsmaschine der im Oberbegriff des Anspruchs 1 angegebenen Art.

Kreiselschwader in Deichselbauart werden zum Transport und am Vorgewende (Richtungsumkehr zwischen zwei Arbeitsstreifen), beispielsweise hydraulisch, über die Kreiselfahrwerke ausgehoben. Ein seitenversetzter Nachlauf des hinteren Rechkreisels wird durch gesteuertes Verdrehen des hinteren Rechkreisel-Fahrwerks herbeigeführt. In zwei verschiedenen Relativstellungen des hinteren Rechkreisels werden entweder zwei Einzelschwade oder ein Doppelschwad gebildet. Es ist denkbar, durch Drehrichtungsumkehr des vorderen Rechkreisels eine Mittelschwaderfunktion für nur zwei Kreiselbreiten einzustellen. Bei Arbeitsstellung der Rechkreisel für einen Doppelschwad können auch mehr als zwei Kreiselbreiten zu einem Schwad zusammengerecht werden. Dann kann bei schwächerem Emtegutanfall ein ausreichend großer Schwad gebildet werden, beispielsweise um eine Häckselkette bei normaler Fahrgeschwindigkeit auszulasten.

Eine Heuwerbungsmaschine dieser Art ist bekannt aus DE-U-90 02 630 und dem Prospekt STOLL "Seitenschwader R 1400 S" der Fa. Stoll. Der Zugpunkt für den zweiten Zugbalken ist dort in Arbeitsfahrtrichtung knapp vor dem Getriebegehäuse des ersten Rechkreisels und etwa vertikal oberhalb der Achse der geschobenen Bodenlaufräder dieses Rechkreisels angeordnet. Dies ist dadurch bedingt, daß das Verteilergetriebe, das die Kraftübertragung von der Zapfwelle des Schleppers zu den beiden Rechkreiseln aufzweigt, an der Vorderseite des Getriebegehäuses des ersten Rechkreisels angeflanscht ist, und ein aufwendiges homokinetisches Gelenk zwischen dem Verteilergetriebe und dem ersten Antriebsstrang zum hinteren Rechkreisel die Position des Zugpunktes bestimmt. Bauartbedingt ist ein aufwendiges Getriebeund Antriebsverbindungskonzept mit zwei Verteilergetrieben und Gleichlaufgelenken erforderlich. Da infolge des nur knapp vor dem Getriebegehäuse des ersten Rechkreisels plazierten Zugpunkts für den zweiten Zugbalken in Arbeitsstellungen mit starkem Querversatz des hinteren Rechkreisels starke Querkräfte auf die Laufräder einwirken, kann es unter ungünstigen Bedingungen und bei nassem Boden und Hangabtriebskräften zum Graben der Räder des hinteren Kreiselfahrwerks kommen, weil der hintere Rechkreisel aufgrund des großen Winkels zwischen dem zweiten Zugbalken und der Fahrtrichtung stark nach innen schiebt. Dann wird die mögliche Arbeitsbreite nicht mehr genutzt, die Arbeitsleistung ist eingeschränkt. Das stets gegen- oder nachsteuemde Fahrwerk des hinteren Rechkreisels kann zu einem unruhigen Lauf führen. Am Vorgewende kommt es wegen der ungünstigen Lage des Zugpunkts des zweiten Zugbalkens zu extremen Knickwinkeln, die bei nach wie vor angetriebenen Rechkreiseln zu kritischen Belastungen in den Gleichlaufgelenken führen.

Bei einer aus DE-A-40 21 812 bekannten und gattungsgemäßen Heuwerbungsmaschine liegt der Zugpunkt des zweiten Zugbalkens am ersten Zugbalken in etwa vertikal oberhalb der Achse der geschobenen Bodenlaufräder des ersten Rechkreisels, und somit nur ganz knapp vor dem Getriebegehäuse des ersten Rechkreisels. Im Betrieb ergeben sich bei seitlich ausgestelltem zweiten Rechkreisel ungünstige kinematische Verhältnisse, d.h. hohe Seitenkräfte für alle Bodenlaufräder, da der Winkel des zweiten Zugbalkens gegenüber der Arbeitsfahrtrichtung sehr groß ist.

Weiterer Stand der Technik ist enthalten in DE-A-28 28 282, DE-U-90 14 438, DE-U-94 00 521, EP-A-0 762 321, EP-A-0 779 022, EP-A-0 614 604 und US-A-3 645 077.

Der Erfindung liegt die Aufgabe zugrunde, eine Heuwerbungsmaschine der eingangs genannten Art zu schaffen, die sich durch eine verbesserte Arbeitsleistung und hohe Spurtreue auch bei kritischen Bedingungen wie am Hang oder nassem Untergrund auszeichnet, eine baulich einfache Konzeption des Getriebe- und Antriebssystems hat und zuverlässig und wartungsfreundlich ist.

Die gestellte Aufgabe wird erfindungsgemäß mit den Merkmalen des Anspruchs 1 gelöst.

Durch den weit nach vorne bis in das vordere Drittel des maximalen Durchmessers der Zinkenumlaufbahn versetzten Zugpunktes des zweiten Zugbalkens werden in Querrichtung wirkende Komponenten des hinteren Rechkreiselfahrwerks und zur Gegensteuerung notwendige Querkomponenten am Fahrwerk des vorderen Rechkreisels verringert, so daß sich selbst unter ungünstigen Arbeitsbedingungen am Hang oder bei nassem Untergrund eine hohe Spurtreue der Maschine ergibt. Die mögliche Arbeitsleistung läßt sich unter allen Bedingungen optimal nutzen. Das Fahrwerk des hinteren Rechkreisels läuft ruhiger, so daß eine optimale Bodenanpassung gewährleistet ist. Das Getriebe- und Antriebsstrangkonzept läßt sich einfach und kostengünstig gestalten. Die Heuwerbungsmaschine ist zuverlässig und wartungsfreundlich. Die Querkräfte an den Reifen können bis zu ca. 40% reduziert werden, was die Grasnarbe schont. Der Zugpunkt sollte zweckmäßig vor der vertikalen Projektion des vordersten Bodenlaufrades des vorderen Rechkreisels liegen, weil dann die Bodenlaufräder der Querkomponente der Zugkraft für den unteren Rechkreisel mit günstigen Hebelarmen entgegenwirken.

Besonders günstig wird mit dem weit vomeliegenden Zugpunkt im Antriebsstrang eine W-Beuge mit nur moderaten Knickwinkeln auch bei extremer Querversetzung erzielt, was kostengünstig ist (einfache Gelenkkupplungen) und der Gleichförmigkeit derAntriebsbewegungsübertragung zugute kommt.

Ferner werden bei weit vorne liegender Position des Verteilergetriebes günstige Winkel im Antriebsstrang und eine Ballastwirkung erzielt, die selbst bei starkem Futteranfall eine gute Rechqualität garantiert. Der Ballast wirkt der vom Erntegut an den Zinken im vorderen Kreiselbereich hervorgerufenen Anhebeneigung entgegen. Ferner hat das vorne liegende Verteilergetriebe den Vorteil, in den Gelenkwellen W-Beugen mit moderaten Knickwinkeln zuzulassen, in denen ohne kostenintensive Weitwinkelgelenke Ungleichförmigkeiten kompensiert werden, denn am Vorgewende sind auch bei eingeschaltetem Antrieb große Schwenkwinkel möglich.

Zweckmäßig werden bei so starken Schwenkwinkeln am Vorgewende symmetrische W-Beugen erzielt, d.h., ein starker Schwenkwinkel im Antriebsstrang wird auf mehrere moderate Knickwinkel aufgeteilt.

Zweckmäßig wird auch stromauf des Verteilergetriebes eine günstige W-Beuge erreicht.

Zweckmäßig liegt der Zugpunkt sogar optimal weit vorne in der Achse des Verteilergetriebegehäuses. Dadurch werden Querkräfte an den Rädern der Fahrwerke weiter verringert, was eine hohen Spurtreue auch unter extremen Bedingungen ergibt. Ferner läßt sich der Antriebsstrang zum hinteren Rechkreisel einfach konzipieren.

Obwohl der Zugpunkt optimal weit vorne liegt, kann ein baulich einfaches Verteilergetriebe verwendet werden. Das im Antrieb entstehende Drehmoment am drehbaren Gehäuseteil wird über die Drehmomentstütze in den zweiten Zugbalken eingeleitet.

Es läßt sich der Antriebsstrang zum zweiten Rechkreisel baulich einfach gestalten, wenn dieser vom Verteilergetriebe zunächst frei und dann im Inneren des zweiten Zugbalkens bis direkt in das Getriebegehäuse des zweiten Rechkreisels verläuft. Ein hinteres Verteilergetriebe wie beim Stand der Technik wird vermieden. Der Antriebsstrang ist im Abstützpunkt im zweiten Zugbalken sicher geführt. Außerdem ergibt sich durch die Position des Abstützpunktes in dem gekröpften zweiten Zugbalken eine zusätzliche Ballastwirkung für den ersten Rechkreisel.

Die Bodenanpassung des hinteren Rechkreisels wird verbessert, wenn dieser sich relativ zum ersten Rechkreisel auf- und abbewegen kann. Eine Begrenzung der Knickbarkeit empfiehlt sich, um Kollisionen der Werkzeuge mit Rahmenteilen auszuschließen.

Ein Gleitlager im Zugpunkt gewährleistet eine stabile Kraftübertragung in diesem Bereich und ermöglicht es, die Baugröße der Zugpunktkonstruktion zu verringern. Kegelrollenlager sind ebenfalls möglich und sehr belastbar.

Zweckmäßig wird jeder Rechkreisel durch eine Überlastkupplung abgesichert. Dies hat den Vorteil, den Antriebsstrang und die Getriebekomponenten stromab der Überlastkupplung einfacher und graziler ausbilden zu können als mit einer beide Rechkreisel gemeinsam absichernden Überlastkupplung. Alternativ kann das Verteilergetriebe als Riementrieb ausgebildet sein, in den baulich einfach zumindest die Überlastkupplung des zweiten Antriebsstranges integriere ist. Bei beiden vorgenannten Ausführungsformen werden Getriebe- und Anfahrschäden und ein Ansprechen einer zentralen Kupplung beim Zuschalten vermieden. Im ersten Fall werden baulich einfache und zuverlässige Ratschenkupplungen an den Gelenkwellen vorgesehen, während im zweiten Fall die Riemenvorspannung für eine Drehmomentbegrenzung sorgt.

Baulich einfach wird dem Umstand Rechnung getragen, daß der zweite Rechkreisel gegebenenfalls doppelt so viel Rechleistung zu erbringen hat wie der erste Rechkreisel, und mit seiner Leistungsfähigkeit die Leistung der Maschine limitiert. Durch eine höhere Übersetzung in den ersten Antriebsstrang oder im Getriebegehäuse des zweiten Rechkreisels läßt sich die Drehzahl beim zweiten Rechkreisel anheben, wird die Futterübergabe zwischen den Rechkreiseln verbessert und können dennoch beide Kreiselköpfe baugleich sein. Alternativ kann der zweite Rechkreisel mit mehr Zinkentragarmen ausgestattet sein als der erste Rechkreisel, um den höheren Futteranfall zu verarbeiten.

Vorteilhaft schwenkt die Laufradachse in Arbeitsfahrtrichtung, so daß die Maschine bei solchen Schwenkbewegungen stabil bleibt und die Wirkungslinie der resultierenden Radkraft bei ausgehobenem Kreiselfahrwerk durch das Kreiselgetriebe geht. Damit lassen sich die Bruchgefahr für die Kreiselachse reduzieren und eine leichte Getriebekonstruktion einsetzen. Auch schwenken die Laufradachsen leichter von der Transport- in die Arbeitsstellung, weil die dynamischen Radkräfte in Drehrichtung wirken. Dies ist ein Bauprinzip entgegengesetzt zu bekannten Ausführungen, bei denen die Laufradachse gegen die Fahrtrichtung ausschwenkt und beispielsweise am Vorgewende bereits gezogene Schwaden überfahren muß. Dort neigt bisher der hintere Rechkreisel zu Nickbewegungen, die Zinkentragarme senken sich ab, die Durchfahrthöhe reicht nicht mehr aus, und bei Kurvenfahrten am Hang kann die Maschine sogar umkippen.

Die gezogenen Bodenlaufräder werden einfach an der Zentralachse jedes Rechkreisels gehaltert. Zum Ausheben reicht ein einseitig beaufschlagbarer Hydraulikzylinder, der durch diese Radgeometrie zum Absenken des Rechkreisels selbsttätig eingeschoben wird.

Der Schwadbegrenzer kann zum Transport ohne manuellen Eingriff des Maschinenführers entgegen der Arbeitsfahrtrichtung beigeschwenkt werden. Dadurch lassen sich auch Bedienungsfehler und Kollisionen beim Wechseln der Arbeitsstellungen ausschließen. Mittels teleskopierbarer Querstreben können verschiedene Schwadbreiten bequem eingestellt werden.

Anhand der Zeichnung werden Ausführungsformen des Erfindungsgegenstandes erläutert. Es zeigen:
- Fig. 1: eine Draufsicht auf eine geschleppte Heuwerbungsmaschine, und zwar einen Kreiselschwader, in einer Arbeitsstellung,
- Fig. 2: eine Seitenansicht, teilweise im Schnitt, der Heuwerbungsmaschine von Fig. 1 in einer ausgehobenen Transportstellung,
- Fig. 3: eine Draufsicht der Heuwerbungsmaschine in einer weiteren Arbeitsstellung,
- Fig. 4: eine Draufsicht der Heuwerbungsmaschine in der Arbeitsstellung von Fig. 1,
- Fig. 5: eine Draufsicht auf die Heuwerbungsmaschine am Vorgewende,
- Fig. 6: eine Draufsicht auf die Heuwerbungsmaschine in der Transportstellung, analog zu Fig. 2,
- Fig. 7: eine Draufsicht auf eine weitere Ausführungsform der Heuwerbungsmaschine, und
- Fig. 8: eine Seitenansicht, teilweise im Schnitt, eines Teils der Heuwerbungsmaschine von Fig. 7.

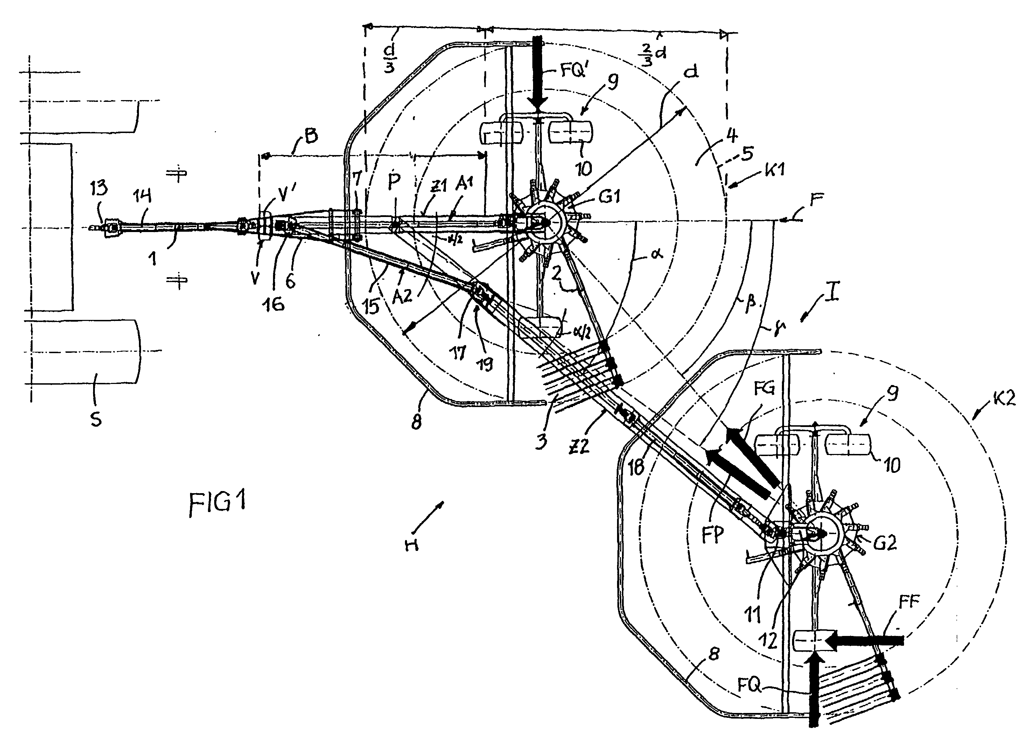

Eine Heuwerbungsmaschine H in den Fig. 1 bis 6, insbesondere ein von einem Schlepper S schleppbarer Kreiselschwader, weist erste und zweite Rechkreisel K1, K2 mit ersten und zweiten Getriebegehäusen G1, G2 auf und wird mit einer Deichsel 6 an eine Anschlußstelle 1 des Schleppers S angehängt. Jeder Rechkreisel K1, K2 besitzt Tragarme 2 für in Gruppen angeordnete Zinken 3, die beim Umlauf eine kreisringförmige Zinkenumlaufbahn 4 mit einem Außendurchmesser d beschreiben. Der Außenumfang der Umlaufbahn 4 ist mit 5 bezeichnet. Die Deichsel 6 ist in einem Anschlußpunkt 7 (horizontale Gelenkachse) mit einem ersten Zugbalken Z1 verbunden, der ein Verteilergetriebe V trägt und sich von diesem bis zum Getriebegehäuse G1 erstreckt. Ein zweiter, sich bis zu einer Gelenkstelle 11 (annähernd vertikale Gelenkachse) erstreckender Zugbalken Z2 ist in einem Zugpunkt P in einer annähernd vertikalen Gelenkachse an den ersten Zugbalken Z1 angeschlossen.

Beide Rechkreisel K1, K2 weisen eine Schutzbügel-Rahmenstruktur 8 und ein Kreiselfahrwerk 9 mit gezogenen Rädern 10 (bei der gezeigten Ausführungsform mit drei Bodenrädern 10) auf und sind, z.B. hydraulisch, mittels des Kreiselfahrwerks 9 aus einer abgesenkten Arbeitsstellung in eine angehobene-Vorgewende- oder Transportstellung anhebbar.

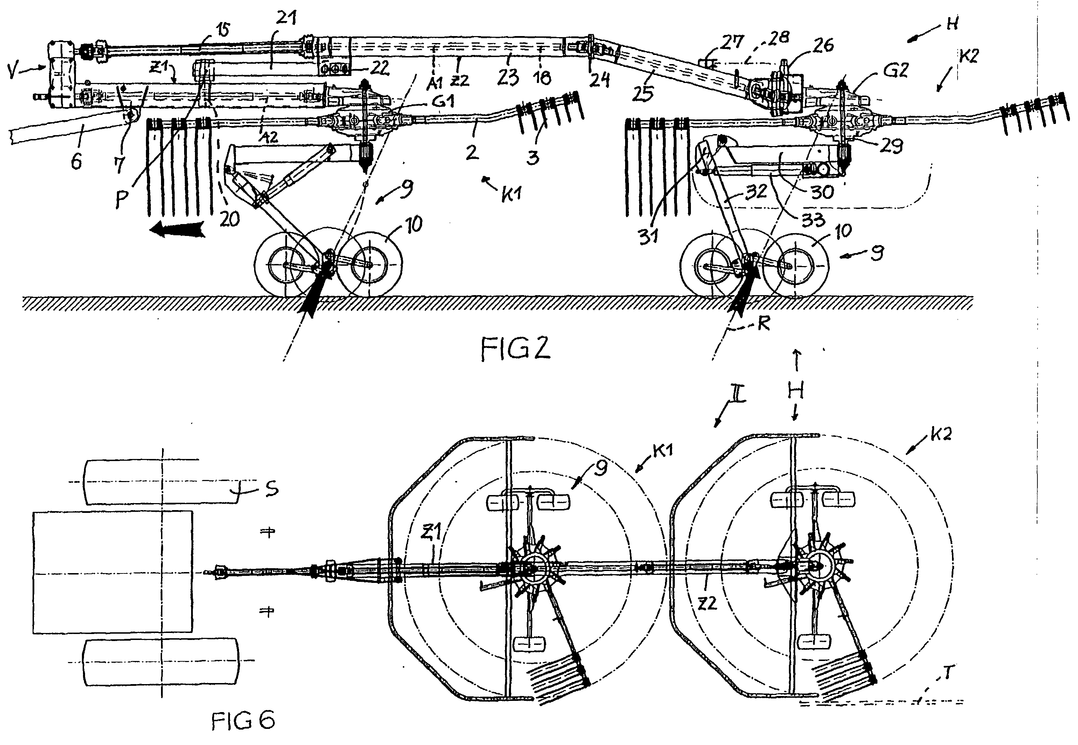

Das Getriebegehäuse G2 des zweiten Rechkreisels K2 ist mit einem Balken 12 mit dem zweiten Zugbalken Z2 in der Gelenkstelle 11 (mit annähernd vertikaler Gelenkachse) verdrehbar verbunden. Die Antriebsenergie für die beiden Rechkreisel K1, K2 wird an einer Zapfstelle 13 des Schleppers S abgegriffen und durch eine Gelenkwelle 14 in das Verteilergetriebegehäuse V übertragen, das ein Kegelrad- oder Stirnradgetriebe oder einen Riementrieb V' enthält. Im Verteilergetriebegehäuse V, das sich beträchtlich vor dem Zugpunkt P (in Fig. 1) befindet, wird die Antriebsenergie auf die beiden Antriebsstränge A1 und A2 aufgezweigt. Im ersten Zugbalken Z1 ist eine nicht näher hervorgehobene Gelenkwelle über beidendige Gelenkkupplungen mit dem Eingang des ersten Getriebegehäuses G1 verbunden. Der zweite Antriebsstrang A2 umfaßt eine freiliegenden Gelenkwelle 15 mit beidendigen Gelenkkupplungen 16, 17 und daran angeschlossene Gelenkwellenabschnitten 18 in dem zweiten Zugbalken Z2. Der zweite Zugbalken Z2 weist einen sich vom Zugpunkt P (Gelenkachse 20 in Fig. 2) bis zu einer Abkröpfung 19 (Abstützpunkt) annähernd parallel zum ersten Zugbalken Z1 verlaufenden Abschnitt 21 auf, der über die Abkröpfung 19 und eine dort angeordnete Gelenkstelle 22 mit annähernd horizontaler Gelenkachse und begrenzter Schwenkbeweglichkeit mit einem darüberliegenden weiteren Abschnitt 23 verbunden ist. Der Abschnitt 23 wird über eine Flanschverbindung 24 mit einem schräg nach unten zum Balken 12 geneigten Abschnitt 25 verlängert. Am Balken 12 ist eine Anlenkstelle 26 (zweckmäßigerweise zwei nebeneinander versetzt angeordnete Anlenkstellen 26) vorgesehen, die auf ein Widerlager 27 auf dem Abschnitt 25 ausgerichtet ist. Ein Stellzylinder 28, z.B. ein Hydraulikzylinder, zwischen der Anlenkstelle 26 und dem Widerlager 27 dient dazu, das zweite Getriebegehäuse G2 bzw. den zweiten Rechkreisel K2 mit seinem Fahrwerk 9 relativ zum zweiten Zugbalken Z2 gesteuert zu drehen.

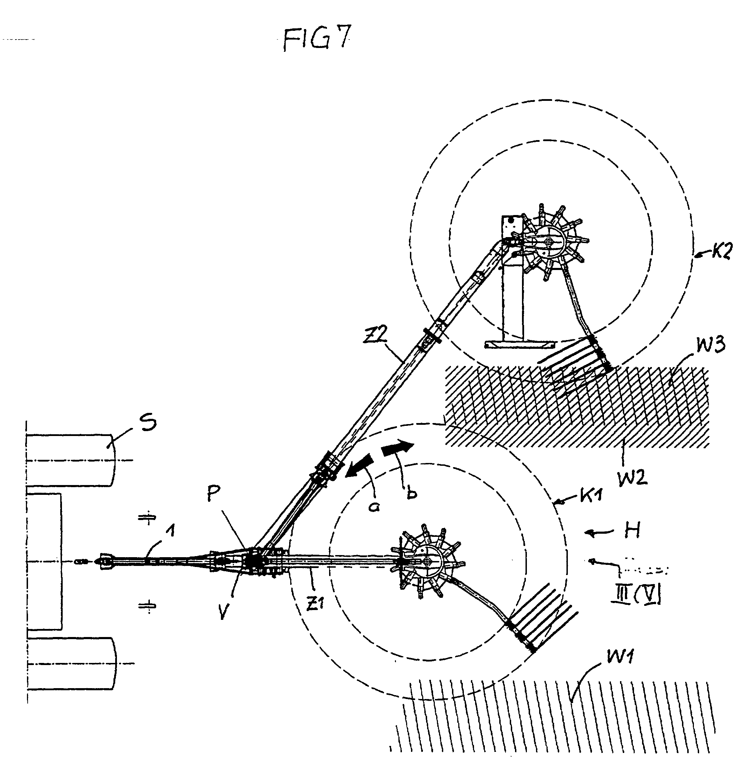

Zum Anbringen des Kreiselfahrwerks 9 (Fig. 2), z.B. am Getriebegehäuse G2, ist eine Zentralachse 29 vorgesehen, an der ein in Fahrtrichtung weisender Träger 30 angebracht ist, welcher in einem Kniegelenk 31 mit einem schräg nach unten und entgegen der Fahrtrichtung F geneigten Rädertragarm 32 verbunden ist. Der Rädertragarm 32 ist im Kniegelenk 31 schwenkbar und wird durch einen Hydraulikzylinder 33 (vorzugsweise einen einseitig beaufschlagbaren Hydraulikzylinder) in der jeweiligen Schwenklage gehalten. Der Hydraulikzylinder 33 stützt sich am Träger 30 bzw. der Zentralachse 29 ab. Insbesondere in der ausgehobenen Transport- oder Vorgewendestellung gemäß Fig. 2 wird durch die in Fahrtrichtung gezogenen Räder ein Verlauf der resultierenden Radkraft R durch das Getriebegehäuse G2 erzielt. Dadurch ist die Bruchgefahr der Kreiselachse reduziert und kann das Getriebe bzw. Getriebegehäuse wegen der geringeren Spannungen leichter ausgebildet sein. Zusätzlich ergibt sich der Vorteil, daß die Radachsen besser von beispielsweise der Transportstellung (Fig. 6) in die Arbeitsstellungen (beispielsweise Fig. 1) schwenken, weil die dynamischen Radkräfte in der jeweiligen Drehrichtung wirken. Der vordere Rechkreisel K1 besitzt das gleiche Kreiselfahrwerk 9.

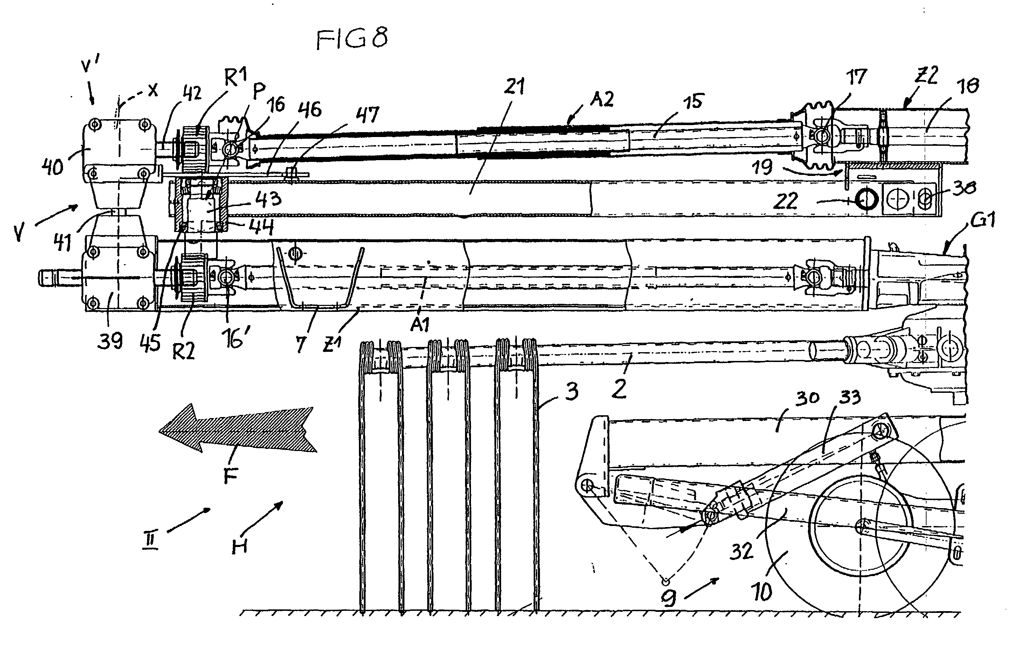

Die Abstützstelle 19 liegt in der Transportstellung (Fig. 6) in Fahrtrichtung geringfügig vor dem ersten Getriebegehäuse G1. Die Lage des Zugpunktes P wird im Hinblick auf das Erzielen einer W-Beuge an der Gelenkwelle 15 durch die Positionen der Gelenkkupplungen 16, 17 bestimmt, derart, daß der Zugpunkt P (beispielsweise in der Transportstellung in Fig. 6) exakt in der Mitte zwischen den Gelenkkupplungen 16, 17 liegt (in Fig. 1). Jedoch ist hervorzuheben, daß der Zugpunkt P zum Sichern der Spurtreue innerhalb eines Bereiches B liegen kann, der sich vom Verteilergetriebegehäuse V bis in die vertikale Projektion des äußeren Drittels des Durchmessers d der Umlaufbahn 5 erstreckt. In Fig. 1 ist die Lage des Zugpunktes P am ersten Zugbalken Z1 so gewählt, daß dieser etwa oberhalb in der Mitte des kreisringförmigen Umlaufbereiches 4 der Zinken 3 liegt. Die Figuren 7 und 8 verdeutlichen eine Lage des Zugpunktes unmittelbar hinter dem Verteilergetriebegehäuse V. Der Zugpunkt P könnte jedoch auch direkt am Verteilergetriebegehäuse V oder in dessen Achse angeordnet sein.

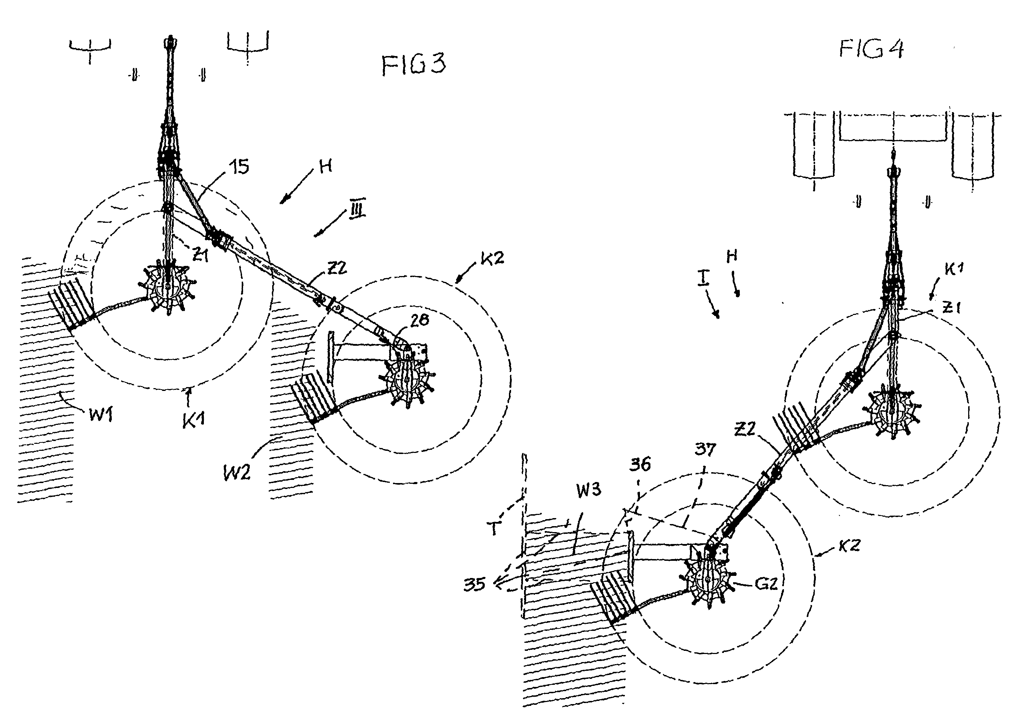

In Fig. 1 ist die Heuwerbungsmaschine H in eine Arbeitsstellung I zum Bilden eines Einzelschwades W3, entsprechend der schematischen Darstellung in Fig. 4, eingestellt. Beide Rechkreisel K1, K2 drehen im gleichen Sinn. Der erste Rechkreisel K1 übergibt das Erntegut an den zweiten Rechkreisel K2, der es in dem Einzelschwad W3 ablegt. Für die Arbeitsstellung I in Fig. 1 ist das Kreiselfahrwerk 9 mittels des Stellzylinders 28 relativ zum zweiten Zugbalken Z2 entgegen dem Uhrzeigersinn verdreht. Der zweite Zugbalken Z2 schließt mit der Längsmittelachse der Heuwerbungsmaschine H einen Winkel α ein. Da die Radkräfte im Zentrum des zweiten Getriebegehäuses 2 wirken, wenn das Kreiselfahrwerk 9 mit einer Kraft FF in Fahrtrichtung F gezogen wird, ergibt sich eine Kraftkomponente FP vom Zentrum des zweiten Getriebegehäuses G2 zum Zugpunkt P, die mit der Längsmittelachse einen Winkel γ einschließt. Wäre der zweite Zugbalken Z2 im Zentrum des ersten Getriebegehäuses G1 mit dort positioniertem Zugpunkt angeschlossen, dann hätte die Kraftkomponente FG einen Winkel β mit der Längsmittelachse, der deutlich größer wäre als der Winkel γ. Dank des deutlich kleineren Winkels γ ergibt sich an den Rädern 10 eine Querkomponente FQ, der das Fahrwerk entgegenwirken muß, um den zweiten Rechkreisel K2 spurtreu zu führen. Eine ähnliche Querkraft FQ' wirkt am Fahrwerk 9' des ersten Rechkreisels und in entgegengesetzter Richtung. Je kleiner der Winkel γ ist, desto kleiner wird die Querkraftkomponente FQ, die vom Fahrwerk aufzunehmen ist, und um so kleiner wird auch die Querkomponente am Fahrwerk des ersten Rechkreisels, die diesen zu verlagern sucht.

Dank der Position des Zugpunktes P und dem dadurch jeweils relativ kleinen Winkel α zwischen den Zugbalken Z1, Z2 bleiben diese Querkräfte gering und ergibt sich eine W-Beuge an der Gelenkwelle 15, d.h., in jeder Gelenkkupplung 16, 17 ergibt sich ein Knickwinkel von jeweils nur α/2, was der Gleichförmigkeit der Antriebskraftübertragung zugute kommt.

In der in den Fig. 2 und 6 gezeigten Transportstellung II laufen die beiden Rechkreisel K1, K2 in Fahrtrichtung F hintereinander, wobei sie über die Fahrwerke 9 ausgehoben sind. Ein zumindest am hinteren Rechkreisel K2 angeordneter Schwadbegrenzer T, z.B: ein Schwadtuch, ist in der Transportstellung II nach hinten beigezogen, um die Transportbreite nicht zu überschreiten. Die Anbringung des Schwadbegrenzers T wird anhand von Fig. 4 erläutert.

In Fig. 3 ist die Heuwerbungsmaschine H in einer weiteren Arbeitsstellung III angeordnet, wobei der hintere Rechkreisel K2 gegenüber Fig. 1 auf die andere Seite der Längsmittelachse verstellt ist. Der Knickwinkel α des zweiten Zugbalkens Z1 gegenüber dem ersten Zugbalken Z1 ist in dieser Arbeitsstellung III noch stärker als in Fig. 1, um zwei Einzelschwade W1, W2 zu formen. Die Relativstellung des hinteren Rechkreisels K2 gegenüber seinem Zugbalken Z2 wird durch den Zylinder 28 gehalten, der von der Arbeitsstellung I in Fig. 1 zweckmäßigerweise von einer Anlenkstelle 26 auf die andere umgesetzt worden ist. In der Arbeitsstellung III könnte die Heuwerbungsmaschine auch als Mittelschwader arbeiten, sofern entweder im Verteilergetriebegehäuse V oder im ersten Getriebegehäuse G1 die bauliche Voraussetzung zur Drehrichtungsumkehr vorgesehen ist. An der Gelenkwelle 15 liegt wiederum eine W-Beuge mit moderaten Knickwinkeln vor.

In Fig. 4 ist die Heuwerbungsmaschine H in der Arbeitsstellung I zum Bilden eines Einzelschwads W3 entsprechend Fig. 1. An einem Träger 34 des hinteren Rechkreisels K2 ist ein liegendes Lenkerparallelogramm 35 schwenkbar angebracht, das den Schwadbegrenzer T parallel zur Fahrtrichtung hält. Über einen Zwischenlenker 36 und eine Steuerstange 37 wird die Relativbewegung zwischen dem zweiten Getriebegehäuse G2 und dem zweiten Zugbalken Z2 so auf das Lenkerparallelogramm 35 übertragen, daß der Schwadbegrenzer T2 aus der in Fig. 4 gezeigten Arbeitsstellung selbsttätig in die in Fig. 6 gezeigte, nach hinten beigezogene Lage verschwenkt wird, sobald der hintere Rechkreisel in die Transportstellung gemäß Fig. 6 übergeführt wird. Zusätzlich läßt sich das Lenkerparallelogramm 35 nach Aushängen der Steuerstange 37 in der beigezogenen Lage arretieren, falls der Schwadbegrenzer T nicht benötigt wird.

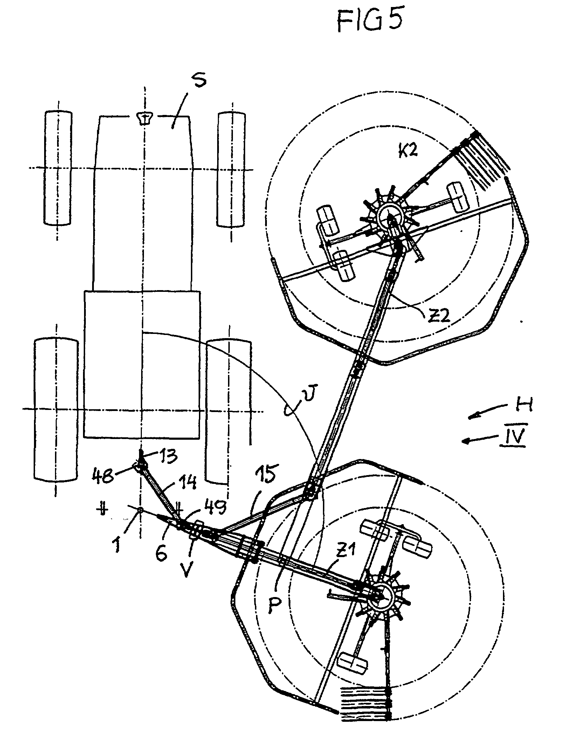

Fig. 5 verdeutlicht die Heuwerbungsmaschine H in der Vorgewendestellung IV, wie sie auftritt, wenn die Heuwerbungmaschine von einem Arbeitsstreifen eine Richtungsumkehr in den nächsten vornimmt. Die an der Anschlußstelle 1 am Schlepper S angehängte Deichsel 6 ist seitlich verschwenkt. Der zweite Zugarm Z2 knickt im Zugpunkt P nahezu über 90° gegenüber dem ersten Zugarm Z1 ab. Dennoch ist an den Gelenkwellen 14, 15 jeweils eine W-Beuge mit moderaten Knickwinkeln gegeben, was wichtig ist, weil die Rechkreisel K1, K2 in der Vorgewendestellung angetrieben sind. Um auch bei der Gelenkwelle 14 eine W-Beuge mit moderaten Knickwinkeln zu erhalten, ist die Gelenkwelle 14 mit Gelenkkupplungen 48, 49 am Zapfwellenanschluß 13 und am Verteilergetriebegehäuse V angeschlossen.

Die Heuwerbungsmaschine gemäß Fig. 7 unterscheidet sich von der vorhergehend beschriebenen Ausführungsform dadurch, daß der Zugpunkt P des zweiten Zugbalkens Z2 am ersten Zugbalken Z1 in Arbeitsfahrtrichtung noch weiter vorne positioniert ist als in den Fig. 1 bis 6, und zwar möglichst nahe hinter dem Verteilergetriebegehäuse V. Durch diese Position des Zugpunktes P werden die Querkraftkomponenten FQ, FQ' an den Rechkreiselfahrwerken 9 noch weiter vermindert. Fig. 7 verdeutlicht die Heuwerbungsmaschine H in der Arbeitsstellung III analog zu Fig. 3 zum Bilden zweier Einzelschwaden W1 und W2. Durch die Richtungspfeile a, b ist angedeutet, daß der erste Rechkreisel K1 umsteuerbar ist, so daß die Heuwerbungsmaschine H auch als Mittelschwader mit gegensinnig angetriebenen Rechkreiseln K1, K2 einsetzbar ist, um einen Mittelschwad W4 zu formen (Arbeitsstellung V).

In Fig. 8 ist erkennbar, daß der Zugpunkt P des zweiten Zugbalkens Z2 unmittelbar hinter dem mit dem ersten Zugbalken Z1 verblockten Verteilergetriebegehäuse (V) liegt. Im übrigen ist in Fig. 8 das modifizierte Kreiselfahrwerk 9 in abgesenkter Arbeitslage des Rechkreisels gezeigt, in der der Hydraulikzylinder 33 z.B. durch den Fahrwiderstand der gezogenen Räder eingeschoben ist.

Das Verteilergetriebegehäuse V weist zwei um eine annähernd vertikale Achse X relativ zueinander verdrehbare Gehäuseteile 39 und 40 auf, zwischen denen eine Übertragungswelle 41 verläuft. Der Gehäuseteil 39 ist mit dem ersten Zugbalken Z1 verbunden und ermöglicht den Anschluß des ersten Antriebsstranges A1. Der zweite Gehäuseteil 40 ist hingegen mit dem zweiten Zugbalken Z2 und um die Achse X drehbar. Zu diesem Zweck ist am zweiten Gehäuseteil 40 eine Drehmomentstütze 46 angeordnet, die sich an einem Widerlager 47 des zweiten Zugbalkens Z 2 abstützen läßt.

Im Zugpunkt P ist ein beispielsweise mit dem ersten Zugbalken Z1 verbundener, vertikal stehender Gelenkzapfen 42 vorgesehen, auf dem Lager 45 (Gleitlager oder Kegelrollenlager) angeordnet sind, die eine Gelenkhülse 44 drehbar lagern. An der Gelenkhülse 44 ist der Abschnitt 21 des zweiten Zugbalkens Z2 angeschweißt. Der Knickbereich zwischen den Abschnitten 21 und 23 des zweiten Zugbalkens Z2 in der Gelenkstelle 22 wird durch eine Bolzen-Langloch-Kopplung 38 begrenzt.

Beide Rechkreisel K1, K2 sind gemäß Fig. 8 (auch analog in Fig. 2) durch Überlastkupplungen R1, R2 voneinander getrennt abgesichert, zweckmäßigerweise durch Ratschenkupplungen. Die Überlastkupplungen R1, R2 sind zwischen den Gelenkkupplungen 16 bzw. 16' und den jeweiligen Ausgangswellen, z.B. 42, der Gehäuseteile 39, 40 angeordnet. Dies ermöglicht es, die Antriebs- und Getriebekomponenten stromab der Überlastkupplungen R1, R2 exakt auf das von jeder Überlastkupplung übertragbare Drehmoment abzustimmen und diese Drehmomente, falls erwünscht, unterschiedlich zu wählen. Sofern das Verteilergetriebe V ein Riemengetriebe ist, kann dieses durch Einstellen der Riemenvorspannung gleichzeitig als integrierte Überlastkupplung R1 für den zweiten Antriebsstrang A2 fungieren.

Der Zugpunkt P, der in Fig. 8 knapp hinter dem Verteilergetriebegehäuse V angeordnet ist, könnte direkt in der Achse X plaziert werden, indem beispielsweise die Gelenkhülse 44 am Gehäuseteil 39 oder am Gehäuseteil 40 gelagert wird.

## Patentansprüche

1. Heuwerbungsmaschine (H), insbesondere geschleppter Kreiselschwader, mit ersten und zweiten, an einer gemeinsamen Deichsel (6) angeschlossenen, zum Umlauf antreibbare Zinken (3) tragenden Rechkreiseln (K1, K2), deren Getriebegehäuse (G1, G2) an ersten und zweiten Zugbalken (Z1, Z2) angebracht sind, mit einem am ersten Zugbalken (Z1) in Arbeitsfahrtrichtung (F) vor dem Getriebegehäuse (G1) des ersten Rechkreisels (K1) angeordneten, als annähernd vertikale, vordere Gelenkachse (11) ausgebildeten Zugpunkt (P) für den zweiten Zugbalken (Z2), wobei der zweite Rechkreisel (K2) relativ zum zweiten Zugbalken (Z2) zwischen unterschiedlichen Arbeitsstellungen und einer Transportstellung (I, II, III, IV, V) verstellbar ist, und mit einem am ersten Zugbalken (Z1) im Abstand vor dem Getriebegehäuse (G1) des ersten Rechkreisels (K1) plazierten Verteilergetriebegehäuse (V), von dem sich erste und zweite Antriebsstränge (A1, A2) zu den Getriebegehäusen (G1, G2) erstrecken, **dadurch gekennzeichnet, daß** der Zugpunkt (P) des zweiten Zugbalkens (Z2) am ersten Zugbalken (Z1) in Arbeitsfahrtrichtung (F) vor dem Getriebegehäuse des ersten Rechkreisels, (G1) und innerhalb eines Bereiches (B) angeordnet ist, der sich aus der vertikalen Projektion des vorderen äußeren Drittels des maximalen Durchmessers der Zinkenumlaufbahn des ersten Rechkreisels (K1) bis zum Verteilergetriebegehäuse (V) nach vorne erstreckt.

2. Heuwerbungsmaschine nach Anspruch 1, **dadurch gekennzeichnet, daß** der zweite Antriebsstrang (A1) in einem bis zur hinteren Gelenkachse (11) führenden Teilbereich am oder im zweiten Zugbalken (Z2) angeordnet ist, daß zwischen dem Teilbereich und dem Verteilergetriebegehäuse (V) eine Gelenkwelle (15), vorzugsweise längenveränderlich, mit beidendigen Gelenkkupplungen (16, 17) zur Ausbildung einer W-Beuge in den Gelenkkupplungen vorgesehen ist, und daß der Zugpunkt (P) in der Mitte zwischen den Gelenkkupplungen (16, 17) angeordnet ist.

3. Heuwerbungsmaschine nach Anspruch 1, **dadurch gekennzeichnet, daß** das Verteilergetriebegehäuse (V) vor dem eine horizontale Gelenkachse (11) definierenden Anschlußpunkt (7) der Deichsel (6) am ersten Zugbalken (Z1) angeordnet ist und, vorzugsweise, als Ballastgewicht näher bei der Anschlußstelle (1) der Zugdeichsel (6) am Schlepper (S) angeordnet ist als beim Anschlußpunkt (7) der Deichsel (6) am ersten Zugbalken (Z1.

4. Heuwerbungsmaschine nach Anspruch 1, **dadurch gekennzeichnet, daß** die Zinken (3) in Gruppen angeordnet sind, die eine kreisringförmige Zinkenumlaufbahn (4) definieren, und daß der Anschlußpunkt (7) der Deichsel (6) am ersten Zugbalken (Z1) vor und der Zugpunkt (P) des zweiten Zugbalkens (Z2) oberhalb der vertikalen Projektion der kreisringförmigen Zinkenumlaufbahn (4) angeordnet sind.

5. Heuwerbungsmaschine nach einem der vorhergehenden Ansprüche, **dadurch gekennzeichnet, daß** eingangsseitig des Verteilergetriebegehäuses (V) eine weitere Gelenkwelle (14) vorgesehen ist, die mit einem Zapfwellenanschluß (13) des Schleppers (S) und dem Getriebeeingang über zwei Gelenkkupplungen (48, 49) verbunden ist, und daß zur Ausbildung einer W-Beuge in den Gelenkkupplungen die Anschlußstelle (1) der Deichsel (6) bzw. des ersten Zugbalkens (21) am Schlepper (S) in der Mitte zwischen den beiden Gelenkkupplungen (48, 49) angeordnet ist

6. Heuwerbungsmaschine nach Anspruch 1, **dadurch gekennzeichnet, daß** das Verteilergetriebegehäuse (V) einen um eine annähernd vertikale Achse (X) drehbaren Gehäuseteil (40) mit Anschluß des zweiten Antriebsstranges (A2) aufweist, und daß der Zugpunkt (P) mit der Achse (X) zusammenfällt.

7. Heuwerbungsmaschine nach Anspruch 1, **dadurch gekennzeichnet, daß** der Zugpunkt (P) zwischen dem Verteilergetriebegehäuse (V) und der dem Verteilergetriebegehäuse (V) zugeordneten Gelenkkupplung (16) der Gelenkwelle (15) angeordnet ist, und daß das Verteilergetriebegehäuse (V) einen um eine annähernd vertikale Achse (X) drehbaren Gehäuseteil (40) aufweist, der über eine Drehmomentstütze (46) mit einem Widerlager (27) auf dem zweiten Zugbalken (Z2) gekoppelt ist.

8. Heuwerbungsmaschine nach Anspruch 1, **dadurch gekennzeichnet, daß** der zweite Zugbalken (Z2) einen ersten, sich vom Zugpunkt (P) bis etwa zum ersten Getriebegehäuse (G1) erstreckenden Abschnitt (21) und einen zweiten, gegenüber dem ersten abgekröpften und den zweiten Antriebsstrang (A2) enthaltenden Abschnitt (23) aufweist.

9. Heuwerbungsmaschine nach Anspruch 8, **dadurch gekennzeichnet, daß** die beiden Abschnitt (21, 22) des zweiten Zugbalkens (Z2) über eine Gelenkstelle (22) mit annähernd horizontaler Gelenkachse begrenzt abknickbar miteinander verbunden sind.

10. Heuwerbungsmaschine nach wenigstens einem der vorhergehenden Ansprüche, **dadurch gekennzeichnet, daß** im Zugpunkt (P) ein in einer Gelenkhülse (44) drehbarer Gelenkzapfen (43) und entweder ein Gleitlager oder zwei beabstandete Wälzlager (45), vorzugsweise Kegelrollenlager, vorgesehen sind.

11. Heuwerbungsmaschine nach Anspruch 1, **dadurch gekennzeichnet, daß** das Verteilergetriebegehäuse (V) ein Kegelrad- oder Stirnradgetriebe (V') (Portalgetriebe) enthält, und daß im ersten und zweiten Antriebsstrang (A1, A2) jeweils eine Überlastkupplung (R1, R2), vorzugsweise eine Ratschenkupplung, enthalten ist, vorzugsweise zwischen einer Ausgangswelle (42) des Verteilergetriebegehäuses (V) und einer weiterführenden Gelenkwelle (15) bzw. einer Gelenkkupplung (16, 16').

12. Heuwerbungsmaschine nach Anspruch 1, **dadurch gekennzeichnet, daß** das Verteilergetriebegehäuse (V) einen Riementrieb mit integrierter Überlastkupplung für zumindest den zweiten Antriebsstrang (A2) aufweist.

13. Heuwerbungsmaschine nach Anspruch 1, **dadurch gekennzeichnet, daß** im Verteilergetriebegehäuse (V) und/oder im zweiten Getriebegehäuse (G2) eine Übersetzungsstufe ins Schnelle für den zweiten Rechkreisel (K2) in Relation zum ersten Rechkreisel (K1) vorgesehen ist.

14. Heuwerbungsmaschine nach Anspruch 1, **dadurch gekennzeichnet, daß** der zweite Rechkreisel (K2) mehr Zinkentragarme (2) aufweist als der erste Rechkreisel (K1).

15. Heuwerbungsmaschine nach Anspruch 1, **dadurch gekennzeichnet, daß** zumindest der zweite Rechkreisel (K2) in Arbeitsfahrtrichtung gezogene Bodenlaufräder (10) an einem Kreiselfahrwerk (9) aufweist.

16. Heuwerbungsmaschine nach Anspruch 15, **dadurch gekennzeichnet, daß** an einer im zweiten Getriebegehäuse (G2) angeordneten Zentralachse (29) ein in Arbeitsfahrtrichtung (F) weisender Träger (30) angebracht ist, an dessen freiem Endbereich in einem Kniegelenk (31) ein schräg nach unten und gegen die Arbeitsfahrtrichtung (F) verlaufender Rädertragarm (32) mittels eines am Träger (38) angreifenden, einseitig beaufschlagbaren Hydraulikzylinders (33) verschwenkbar abgestützt ist

17. Heuwerbungsmaschine nach Anspruch 1, **dadurch gekennzeichnet, daß** an einem Schutzbügelrahmen (8) des zweiten Rechkreisels (K2) seitlich ein mittels eines liegenden Lenkerparallelogramms (35), vorzugsweise mit teleskopartig verstellbaren Querstreben, ein Schwadbegrenzer (T) angeordnet ist, und daß das Lenkerparallelogramm (35) mittels Relativbewegungen zwischen dem zweiten Zugbalken (Z2) und dem zweiten Rechkreisel (K2) abgreifenden (37) entgegen der Arbeitsfahrtrichtung (F) bis in eine nach hinten beigezogene Stellung des Schwadbegrenzers (T) verstellbar ist.

## Claims

1. Haymaking machine (H), more especially a tractor-towed rotary swath-forming apparatus, having first and second rotary rakes (K1, K2), which communicate with a common tow-bar (6) and carry rotatably drivable tines (3), the gear housings (G1, G2) of said rakes being attached to first and second tie-bars (Z1, Z2), said machine having a towing point (P) for the second tie-bar (Z2), which point is disposed on the first tie-bar (Z1) in front of the gear housing (G1) of the first rotary rake (K1), when viewed with respect to the operational travel direction (F), and is in the form of an approximately vertical front pivotal axle (11), the second rotary rake (K2) being displaceable relative to the second tie-bar (Z2) between various operational positions and a conveying position (I, II, III, IV, V), and said machine having a distributor gear housing (V), which is placed on the first tie-bar (Z1) at a spacing in front of the gear housing (G1) of the first rotary rake (K1), from which housing (V) first and second drive lines/tracks (A1, A2) extend to the gear housings (G1, G2), **characterised in that**, when viewed with respect to the operational travel direction (F), the towing point (P) of the second tie-bar (Z2) is disposed on the first tie-bar (Z1) in front of the gear housing (G1) of the first rotary rake and within a region (B) which extends forwardly from the vertical projection of the outer front third of the maximum diameter of the circular tine path of the first rotary rake (K1) to the distributor gear housing (V).

2. Haymaking machine according to claim 1, **characterised in that** the second drive line (A1) is disposed in a partial region, extending to the rear pivotal axle (11), on or in the second tie-bar (Z2), **in that** a pivotal shaft (15) is provided, preferably in a length-variable manner, between the partial region and the distributor gear housing (V) with pivotal couplings (16, 17) at both ends to form a W-shaped bend in the pivotal couplings, and **in that** the towing point (P) is disposed in the centre between the pivotal couplings (16, 17).

3. Haymaking machine according to claim 1, **characterised in that** the distributor gear housing (V) is disposed in front of the point (7) at which the bar (6) communicates with the first tie-bar (Z1), which point defines a horizontal pivotal axle (11), and said housing is preferably disposed as ballast weight closer to the location (1) where the tow-bar (6) communicates with the tractor (S) than the point (7) at which the bar (6) communicates with the first tie-bar (Z1).

4. Haymaking machine according to claim 1, **characterised in that** the tines (3) are disposed in groups which define a circular tine path (4), and **in that** the point (7) at which the bar (6) communicates with the first tie-bar (Z1) is disposed in front of the vertical projection of the circular tine path (4), and the towing point (P) of the second tie-bar (Z2) is disposed above said projection.

5. Haymaking machine according to one of the preceding claims, **characterised in that** an additional pivotal shaft (14) is provided at the inlet end of the distributor gear housing (V), which shaft is connected to a power take-off shaft connection (13) of the tractor (S) and to the gear inlet via two pivotal couplings (48, 49), and **in that** the location (1) where the bar (6) or respectively the first tie-bar (21) communicates with the tractor (S) is disposed in the centre between the two pivotal couplings (48, 49) to form a W-shaped bend in the pivotal couplings.

6. Haymaking machine according to claim 1, **characterised in that** the distributor gear housing (V) has a housing part (40), which is rotatable about an approximately vertical axis (X) and communicates with the second drive line (A2), and **in that** the towing point (P) coincides with the axis (X).

7. Haymaking machine according to claim 1, **characterised in that** the towing point (P) is disposed between the distributor gear housing (V) and the pivotal coupling (16) of the pivotal shaft (15) associated with the distributor gear housing (V), and **in that** the distributor gear housing (V) has a housing part (40), which is rotatable about an approximately vertical axis (X) and is connected to an abutment (27) on the second tie-bar (Z2) via a torque support (46).

8. Haymaking machine according to claim 1, **characterised in that** the second tie-bar (Z2) has a first portion (21), which extends from the towing point (P) to substantially the first gear housing (G1), and a second portion (23) which is bent at right angles to the first portion and includes the second drive line (A2).

9. Haymaking machine according to claim 8, **characterised in that** the two portions (21, 22) of the second tie-bar (Z2) are interconnected so as to be downwardly bendable to a limited extent via a pivotal location (22) with an approximately horizontal pivotal axis.

10. Haymaking machine according to at least one of the preceding claims, **characterised in that** a pivot pin (43), which is rotatable in a pivotal sleeve (44), and either a friction bearing or two spaced-apart antifriction bearings (45), preferably conical roller bearings, are provided at the towing point (P).

11. Haymaking machine according to claim 1, **characterised in that** the distributor gear housing (V) includes a bevel gear or spur gear (V') (portal-type gear), and **in that** an overload coupling (R1, R2), preferably a ratchet coupling, is included in each of the first and second drive lines (A1, A2) respectively, preferably between an output shaft (42) of the distributor gear housing (V) and a continuing pivot shaft (15) or respectively a pivotal coupling (16, 16').

12. Haymaking machine according to claim 1, **characterised in that** the distributor gear housing (V) has a belt drive with an integrated overload coupling for at least the second drive line (A2).

13. Haymaking machine according to claim 1, **characterised in that** a transmission stage to high speed is provided in the distributor gear housing (V) and/or in the second gear housing (G2) for the second rotary rake (K2) in relation to the first rotary rake (K1).

14. Haymaking machine according to claim 1, **characterised in that** the second rotary rake (K2) has more tine carrying arms (2) than the first rotary rake (K1).

15. Haymaking machine according to claim 1, **characterised in that** at least the second rotary rake (K2) has ground running wheels (10) which are towed, when viewed with respect to the operational travel direction, on a rotary chassis (9).

16. Haymaking machine according to claim 15, **characterised in that** a carrier (30) is attached to a central spindle (29), disposed in the second gear housing (G2), and points in the operational travel direction (F), a wheel carrying arm (32), which extends inclinedly downwardly and in opposition to the operational travel direction, being pivotably supported at the free end region of said carrier in a toggle joint (31) by means of an hydraulic cylinder (33), which cooperates with the carrier (38) and can be acted-upon on one side.

17. Haymaking machine according to claim 1, **characterised in that** a swath limiter (T) is disposed laterally on a protective frame (8) of the second rotary rake (K2) by means of a horizontal guide rod parallelogram (35), preferably with telescopically adjustable transverse bars, and **in that** the guide rod parallelogram (35) is displaceable by means of relative movements between the second tie-bar (Z2) and the second rotary rake (K2) pick-up end (37) oppositely to the operational travel direction (F) into a rearwardly drawn-in position of the swath limiter (T).

## Revendications

1. Machine de fenaison (H), notamment andaineuse circulaire tractée, avec des première et seconde javeleuses (K1,K2) raccordées à un timon commun (6), supportant des dents (3) pouvant être entraînées en rotation, dont les carters d'engrenage (G1, G2) sont montés à des première et seconde barres de traction (Z1, Z2), avec un point de traction (P) pour la seconde poutre de traction (Z2), disposée à la première poutre de traction (Z1) dans la direction de roulement (F) en amont du carter d'engrenage (G1) de la première javeleuse circulaire (K1), réalisé sous forme d'axe d'articulation avant (11), approximativement vertical, où la seconde javeleuse circulaire (K2) est ajustable relativement à la seconde poutre de traction (Z2) entre des positions de travail différentes et une position de transport (I,II,III,IV,V), et avec un carter d'engrenage distributeur (V) placé à la première poutre de traction (Z1) à une distance en amont du carter d'engrenage (G1) de la première javeleuse circulaire (K1), à partir duquel s'étendent des première et deuxième cordes d'entraînement (A1,A2) aux carters d'engrenage (G1, G2), **caractérise en ce que** le point de traction (P) de la seconde poutre de traction (Z2) est disposé à la première poutre de traction (Z1) dans la direction de roulement (F) en amont du carter d'engrenage (G1) de la première javeleuse circulaire et à l'intérieur d'une zone (B) qui s'étend à partir de la projection verticale du tiers extérieur avant du diamètre maximal de la trajectoire des dents de la première javeleuse circulaire (K1) jusqu'au carter d'engrenage distributeur (V) vers l'avant.

2. Machine de fenaison selon la revendication 1,
**caractérisée en ce que** la deuxième corde d'entraînement (A1) est disposée dans une zone partielle menant jusqu'à l'axe d'articulation arrière (11) à ou dans la deuxième poutre de traction (22), **en ce qu'**il est prévu entre la zone partielle et le carter d'engrenage distributeur (V) un arbre d'articulation (15), de préférence à position modifiable, avec des accouplements d'articulation aux deux extrémités (16,17) pour la réalisation d'un pliage en W dans les accouplements d'articulation, et **en ce que** le point de traction (P) est disposé au milieu entre les accouplements d'articulation (16,17).

3. Machine de fenaison selon la revendication 1, **caractérisée en ce que** le carter d'engrenage distributeur (V) est disposé en amont du point de raccordement (7) du timon (6) définissant un axe d'articulation horizontal (11), à la première poutre de traction (Z1) et, de préférence, est disposé comme ballast plus proche de l'emplacement de raccordement (1) du timon de traction (6) à la remorque (S) qu'au point de raccordement (7) du timon (6) à la première poutre de traction (Z1).

4. Machine de fenaison selon la revendication 1, **caractérisée en ce que** les dents (3) sont disposées par groupes qui définissent une trajectoire de dents circulaire (4), et **en ce que** le point de raccordement (7) du timon (6) à la première poutre de traction (Z1) est disposé devant et le point de traction (P) de la seconde poutre de traction (Z2) au-dessus de la projection verticale de la trajectoire de dents circulaire (4).

5. Machine de fenaison selon l'une des revendications précédentes, **caractérisée en ce qu**'il est prévu, côté entrée du carter d'engrenage distributeur (V), un arbre d'articulation supplémentaire (14) qui est relié à un raccord de prise de force (13) du tracteur (S) et à l'entrée d'engrenage par deux accouplements d'articulation (48, 49) et en ce que, pour former un pliage en W dans les accouplements d'articulation, l'emplacement de raccordement (1) du timon (6) respectivement de la première poutre de traction (21) est disposé à la remorque (S) au milieu entre les deux accouplements d'articulation (48, 49).

6. Machine de fenaison selon la revendication 1, **caractérisée en ce que** le carter d'engrenage distributeur (V) présente une partie de boîtier (40) apte à tourner autour d'un axe approximativement vertical (X), avec un raccordement de la deuxième corde d'entraînement (A2), et **en ce que** le point de traction (P) coïncide avec l'axe (X).

7. Machine de fenaison selon la revendication 1, **caractérisée en ce que** le point de traction (P) est disposé entre le carter d'engrenage distributeur (V) et l'accouplement d'articulation (16) de l'arbre d'articulation (15) associé au carter d'engrenage distributeur (V), et **en ce que** le carter d'engrenage distributeur (V) présente une partie de boîtier (40) apte à tourner autour d'un axe approximativement vertical (X) qui est couplée par un appui de couple de rotation (46) à une butée (27) sur la seconde poutre de traction (Z2).

8. Machine de fenaison selon la revendication 1, **caractérisée en ce que** la seconde poutre de traction (Z2) présente un premier tronçon (21) s'étendant du point de traction (P) approximativement jusqu'au premier carter d'engrenage (G1) et un deuxième tronçon (23) coudé par rapport au premier, contenant la deuxième corde d'entraînement (A2).

9. Machine de fenaison selon la revendication 8, **caractérisée en ce que** les deux tronçons (21, 23) de la seconde poutre de traction (Z2) sont reliés par un emplacement d'articulation (22) à axe d'articulation approximativement horizontal l'un à l'autre d'une manière pliable dans une étendue limitée.

10. Machine de fenaison selon au moins l'une des revendications précédentes, **caractérisée en ce que** sont prévues dans le point de traction (P) un pivot d'articulation (43) tournant dans un manchon d'articulation (44) et soit un palier de coulissement soit deux paliers de roulement espacés (45), de préférence des paliers coniques à rouleaux.

11. Machine de fenaison selon la revendication 1, **caractérisée en ce que** le carter d'engrenage distributeur (V) comprend un engrenage à roues coniques ou à roues droites (V') (engrenage portique), et **en ce que** dans le premier et second faisceau d'entraînement (A1, A2) se trouve respectivement un accouplement de surcharge (R1, R2), de préférence un accouplement à rochet, de préférence entre un arbre de sortie (42) du carter d'engrenage distributeur (V) et un arbre d'articulation (15) respectivement un accouplement d'articulation (16, 16') de continuation.

12. Machine de fenaison selon la revendication 1, **caractérisée en ce que** le carter d'engrenage distributeur (V) présente un entraînement à courroie avec un accouplement de surcharge intégré pour au moins le deuxième faisceau d'entraînement (A2).

13. Machine de fenaison selon la revendication 1, **caractérisée en ce qu**'il est prévu dans le carter d'engrenage distributeur (V) et/ou dans le second carter d'engrenage (G2) un étage multiplicateur pour la seconde javeleuse circulaire (K2) relativement à la première javeleuse circulaire (K1).

14. Machine de fenaison selon la revendication 1, **caractérisée en ce que** la seconde javeleuse circulaire (K2) présente un plus grand nombre de bras de support de dents (2) que la première javeleuse circulaire (K1).

15. Machine de fenaison selon la revendication 1, **caractérisée en ce qu**'au moins la seconde javeleuse circulaire (K2) présente des roues de roulement au sol (10) tirées dans la direction de roulement à un mécanisme de roulement circulaire (9).

16. Machine de fenaison selon la revendication 15, **caractérisée en ce qu**'il est disposé à un axe central (29) disposé dans le second carter d'engrenage (G2) un support (30) orienté dans la direction de roulement (F) à la zone d'extrémité libre duquel, dans une articulation coudée (31), prend appui d'une manière pivotante un bras de support de roue (32) s'étendant en biais vers le bas et contre la direction de roulement (F), au moyen d'un vérin hydraulique (33) s'appliquant au support (38), apte à être sollicité à un côté.

17. Machine de fenaison selon la revendication 1, **caractérisée en ce qu**'il est disposé à un châssis d'étrier de protection (8) de la seconde javeleuse (K2) sur le côté un limitateur d'andain (T), actionnable au moyen d'un parallèlogramme de bielles reposant à plat (35), de préférence avec des longerons transversaux ajustables télescopiquement, et en ce que le parallélogramme de bielles (35) est ajustable au moyen d'une tige de commande (37) détectant des mouvements relatifs entre la seconde poutre de traction (Z2) et la seconde javeleuse circulaire (K2) contre la direction de roulement (F) jusque dans une position tirée vers l'arrière du limitateur d'andain (T).
